(19)

Europäisches
Patentamt
European
Patent Office
Office européen
des brevets

(11)  EP 2 860 470 B1

(12)  **EUROPEAN PATENT SPECIFICATION**

(45) Date of publication and mention
of the grant of the patent:
**07.03.2018  Bulletin 2018/10**

(51) Int Cl.:
*B60H 1/00* (2006.01)       *F24H 3/04* (2006.01)
*F24H 3/12* (2006.01)       *F24H 9/18* (2006.01)
*F25B 21/02* (2006.01)

(21) Application number: **14186992.5**

(22) Date of filing: **30.09.2014**

(54) **Heat exchanger having a plurality of thermoelectric modules connected in series**

Wärmetauscher mit mehreren reihengeschalteten thermoelektrischen Modulen

Échangeur de chaleur présentant plusieurs modules thermoélectriques connectés en série

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2013  US 201361886706 P
04.10.2013  US 201361886712 P
08.05.2014  US 201414273006**

(43) Date of publication of application:
**15.04.2015  Bulletin 2015/16**

(73) Proprietor: **MAHLE International GmbH
70376 Stuttgart (DE)**

(72) Inventors:
• **Wang, Mingyu
Amherst, NY New York 14501 (US)**
• **Kadle, Prasad S.
Williamsville, NY New York 14221 (US)**
• **Craig, Thimothy D.
Williamsville, NY New York 14221 (US)**

(74) Representative: **BRP Renaud & Partner mbB
Rechtsanwälte Patentanwälte
Steuerberater
Königstraße 28
70173 Stuttgart (DE)**

(56) References cited:
**EP-A1- 2 428 746          EP-A2- 2 518 424
WO-A1-2011/036854     DE-A1-102009 058 673
DE-T2- 69 813 650**

**Description**

TECHNICAL FIELD

This disclosure generally relates to a thermoelectric heat exchanger, and more particularly relates to groups of series connected thermoelectric modules, wherein the number of modules in each group that are electrically connected in series is determined based on a voltage value of a voltage source and a local temperature difference proximate to the group.

BACKGROUND OF INVENTION

It is known to incorporate thermoelectric (TE) devices into heat exchangers so that the heat exchanger can function as a standalone heat pump. Such heat exchangers can be used to pump heat between coolant and air, air and air, or coolant and coolant. It is known to connect a number of devices in series based on the available supply voltage for the devices. However, the number of devices connected in series must also be optimized for the temperature difference across the devices. Document DE102009058673A1 discloses a heat exchanger according to the preamble of claim 1.

SUMMARY OF THE INVENTION

According to the present invention the above objection is solved by the features of claim 1.
Further features and advantages will appear more clearly on a reading of the following detailed description of the preferred embodiment, which is given by way of non-limiting example only and with reference to the accompanying drawings.

BRIEF DESCRIPTION OF DRAWINGS

The present invention will now be described, by way of example with reference to the accompanying drawings, in which:

Fig. 1 is a schematic view of a thermoelectric heat transfer system in accordance with one embodiment;
Fig. 2 is perspective cut-away view of a thermoelectric heat exchanger of the system of Fig. 1 in accordance with one embodiment;
Figs. 3A, 3B, 3C and 3D show various details of the thermoelectric heat exchanger of the system of Fig. 1 in accordance with one embodiment; and
Fig. 4 is a graph of a variation in temperature along the length of a tube in the heat exchanger of Fig. 2 in accordance with one embodiment.

DESCRIPTION OF THE PREFERED EMBODIMENT

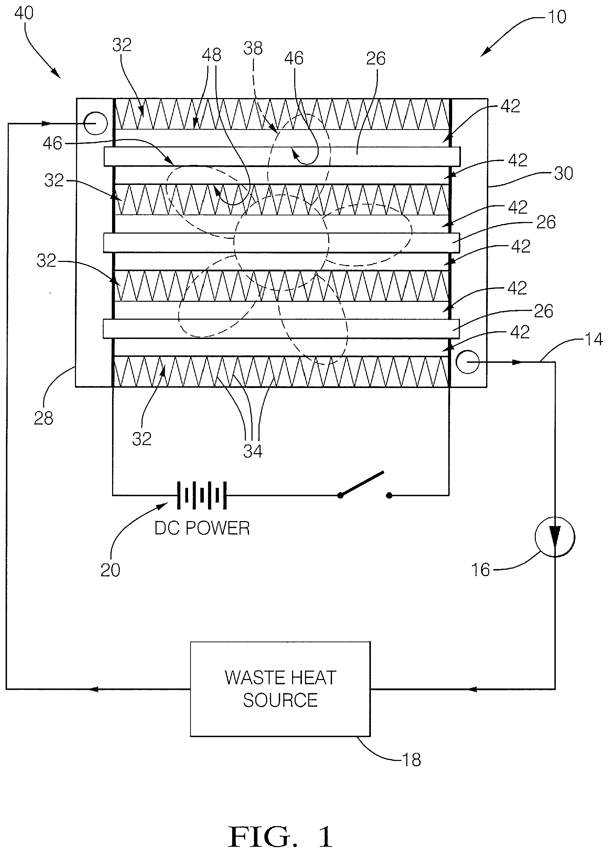

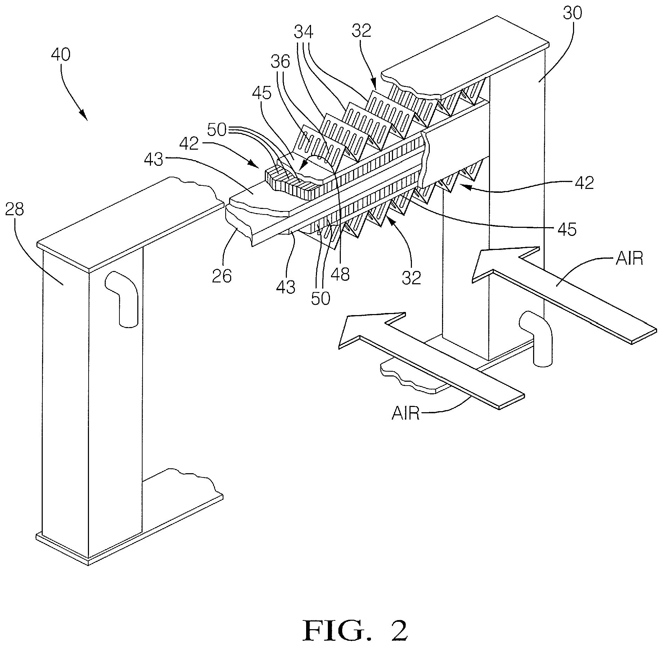

Fig. 1 illustrates a non-limiting example of a thermoelectric heat transfer system, hereafter referred to as the system 10. In general, the system 10 defines a coolant circuit 14 where coolant is circulated by a pump 16. A suitable coolant is a mixture of water and ethylene-glycol if the system is intended for an automotive application. However, other coolant chemistries may be suitable, particular for non-automotive applications. The coolant is typically circulated through a waste heat source 18 in fluid communication with the coolant circuit 14 to remove heat from the waste heat source 18. In an automotive application, the waste heat source 18 may be an internal combustion engine (not shown); or a battery pack (not shown), drive motor (not shown), or inverter (not shown) of an electric or hybrid-electric vehicle.
The system 10 also includes a thermoelectric heat exchanger, hereafter referred to as the heat exchanger 40. The heat exchanger 40 is also in fluid communication with the coolant circuit 14. The heat exchanger 40 generally includes an inlet tank 28 and an outlet tank 30 in fluid communication with the coolant circuit 14, and includes a plurality of flat, thermally conductive conduits or tubes, hereafter the tube 26, configured to fluidicly interconnect the inlet tank 28 and the outlet tank 30. The tube 26 is generally configured to contain coolant flowing through the tube 26, and thermally couple the coolant in the coolant circuit 14 to an exterior surface of the tube 26. The tube 26, the inlet tank 28, and the outlet tank 30 may be suitably formed of metal such as aluminum or a copper alloy. The heat exchanger 40 may include convoluted, thermally conductive fins, hereafter the fin 32, which are configured to transfer heat from the fin to air passing across the fin 32. The fin 32 may include or define louvers 36 (Fig. 2) to improve heat transfer from the fin 32 to air flowing about the fin 32. Preferably, the tube 26 and the fin 32 of the heat exchanger 40 are also alternately arranged in a stacked configuration. A fan 38 may be provided to urge air to flow across or about the fin 32 to improve heat transfer from the fin to the air.

The heat exchanger 40 includes one or more thermoelectric assemblies, hereafter the assembly 42, thermally coupled to the tube 26 and the fin 32. The assembly 42 is generally configured to heat or cool the fin 32 relative to the tube 26 in response to a voltage source 20 being applied to the assembly 42. As such, in this example the assembly 42 is interposed between the exterior surface of the tube 26 and the fin 32.

The amount of heating or cooling of the fin 32 relative to the tube 26 is dependent on a voltage value (magnitude and polarity) output by the voltage source 20. The heat exchanger described herein may be particularly advantageous for passenger cabin heating in automobiles with high efficiency propulsion systems that do not generate sufficient waste heat to adequately heat a passenger cabin of the automobile when ambient temperatures outside of the vehicle are relatively cold, less than 15°C for example. By utilizing a thermoelectric assembly (the assembly 42) to add heat to (i.e. - over or above) whatever heat is produced by the waste heat source (e.g. a battery pack), the overall efficiency of heating the passenger cabin is improved.

Fig. 2 further illustrates non-limiting details of the heat exchanger 40. The assembly 42 includes a plurality of thermoelectric modules 50. The assembly 42 is disposed between the tube 26 and the fin 32 of the heat exchanger 40 to create a temperature differential between the tube 26 and the fin 32 when electrical power is applied. In this non-limiting example, the assembly 42 includes a first thermally conductive surface, hereafter the first surface 48 (Fig. 1), in thermal contact with the fin 32, and second thermally conductive surface, hereafter the second surface 46, in thermal contact with the tube 26. If the assembly is electrically powered for heating the fin 32 relative to the tube 26, the second surface 46 may also referred to as the cold surface, and the first surface 48 may also be referred to as the hot surface. The operation of thermoelectric modules (TEMs) that form the assembly 42 is well known in the art and will not be described in detail.

Continuing to refer to Fig. 2, the assembly 42 may also include a pair of plates on opposite sides of plurality of thermoelectric modules 50, a first dielectric plate 45 coupled to the first surface 48 and a second dielectric plate 43 coupled to the second surface 46. The plurality of thermoelectric modules 50, e.g. - N-type and P-type thermoelectric semiconductor devices that form the thermoelectric modules 50, may be arranged in an alternating N-element and P-element configuration between the first dielectric plate 45 and the second dielectric plate 43, as will be recognized those skilled in the art. Alternatively, the second dielectric plate 43 may be omitted so the thermoelectric modules 50 are attached directly to the tube 26. That is, the tube 26 is an electrical contact for the thermoelectric assembly. To achieve this, the tube 26 may be plated with a metal suitable for soldering, copper for example. The thermoelectric modules 50 may be advantageously coupled electrically in series and thermally in parallel.

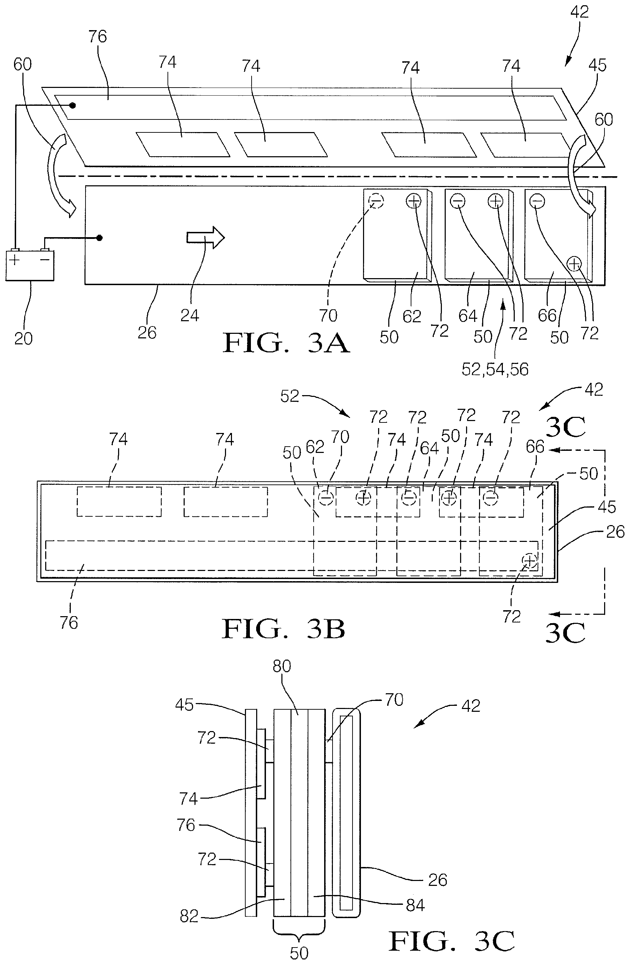

It has been observed that the temperature of the tube 26 varies along the length of the tube due to heat being removed from the coolant passing within the tube 26. As such, the overall performance of the heat exchanger 40 can be optimized by varying the number of the thermoelectric modules 50 that are electrically interconnected in series based on the temperature of the tube 26 and the fin 32 proximate to the thermoelectric modules 50 that are electrically interconnected in series. That is, each of the thermoelectric modules 50 is electrically interconnected into a group 52 (Fig. 3A) of series connected modules, for example a first group 54 and a second group 56. Such a configuration of variable group numbers stands in contrast to a thermoelectric heat exchanger where the same number of thermoelectric modules 50 is electrically interconnected in series into each group.

The following is a description of how to determine the optimum number of thermoelectric modules 50 that should be electrically interconnected to form a group of series connected modules based on a voltage value of the voltage source and a local temperature difference between the tube and the fin proximate to the group. It is recognized that in some circumstances, the number of series connected modules may be the same at all locations of the heat exchanger. However, in instances where there is enough of a change in the coolant temperature to warrant varying the number of series connected modules in each group, then the teachings presented herein make that option feasible.

The temperature of the coolant supplying heat to the thermoelectric modules 50 for heating the airflow through a heat exchanger 40 may be represented by

$$T_{clt} = T_{clt,0} - \left(1 - e^{-\frac{x}{L}}\right)\left(T_{clt,0} - T_{clt,l}\right)$$

Eq. 1,

where $T_{clt}$ is the coolant temperature at position x along the tube, $T_{clt,0}$ is the coolant temperature at the entrance of the tube 26 (i.e. - coolant from the inlet tank 28), and $T_{clt,l}$ represents the coolant temperature at the exit of tube (i.e. - coolant to the outlet tank 30). The parameter L represents a characteristic length of the tube where the coolant loses 63.2% of the total temperature drop of the entire tube length. More generally, the coolant temperature change along the coolant path may be represented by $T_{clt} = f(x)$.

Assuming the groups 52 of thermoelectric modules 50 are to heat the airflow to an uniform temperature of $T_{air}$ across the face of the heat exchanger 40 by drawing heat from the coolant stream inside the tube 26, the temperature difference between the air temperature and the coolant temperature may be described by

$$T_{air} - T_{clt} = T_{air} - T_{clt,0} + \left(1 - e^{-\frac{x}{L}}\right)\left(T_{clt,0} - T_{clt,l}\right)$$

Eq. 2,

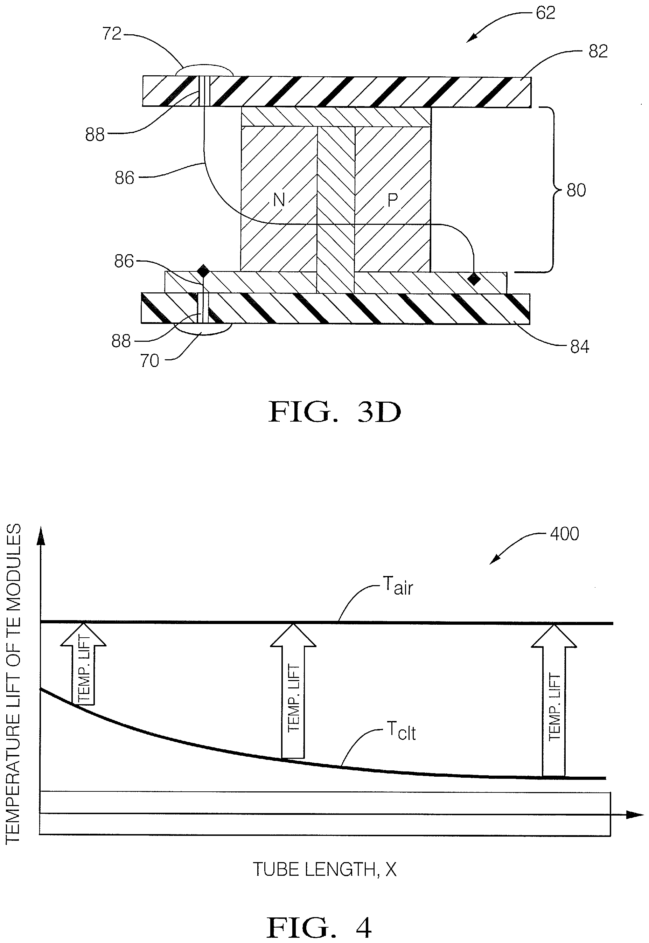

and illustrated in graph 400 (Fig. 4) for coolant flowing in the direction of arrow 24 (Fig. 3A).

It is known that the heating coefficient of performance (COP) of a thermoelectric module is related to the cooling COP by a constant of one,

$$COP_h = COP_c + 1$$

Eq. 3,

and the cooling COP is given by,

$$COP_c = \frac{SIT_C - K\Delta T - \frac{1}{2}RI^2}{I[S\Delta T + RI]}$$

Eq. 4,

where S is the Seebeck coefficient, I is the electrical current through the TE module, K is the thermal conductivity between the thermoelectric modules 50 hot plate and cold plate, R is the electrical resistance of one (or the average of) the thermoelectric modules 50 in a group, and $\Delta T$ is the temperature difference between the hot plate temperature TH and the cold plate temperature TC, which may be written as,

$$\Delta T = T_H - T_C$$

Eq. 5.

Using Ohm's law,

$$I = \frac{V}{R}$$

Eq. 6,

the cooling COP may be represented by

$$COP_c = \frac{ST_C V - K\Delta TR - \frac{1}{2}V^2}{S \cdot \Delta TV + V^2}$$

Eq. 7.

When the cooling COP achieves a maximal value under a given voltage (known as the optimal voltage), the heating COP also achieves the maximum. The optimal voltage can be obtained by the following derivative equations,

$$\frac{dCOP_c}{dV} = 0$$

Eq. 8

$$\frac{dCOP_c}{dV} = \frac{\left(S\Delta TV + V^2\right)\left(ST_C - V\right) - \left(S\Delta T + 2V\right)\left(ST_C V - K\Delta TR - \frac{1}{2}V^2\right)}{\left(S \cdot \Delta TV + V^2\right)^2}$$

Eq. 9

this may be simplified as,

$$\left(\tfrac{1}{2}\Delta T + T_C\right)V^2 - 2\frac{KR\Delta T}{S}V - KR\Delta T^2 = 0 \qquad\qquad \text{Eq. 10.}$$

Solving for V obtains,

$$V_{optimal} = \frac{\dfrac{KR\Delta T}{S} \pm \dfrac{KR\Delta T}{S}\sqrt{1 + \left(\tfrac{1}{2}\Delta T + T_C\right)\dfrac{S^2}{KR}}}{\left(\tfrac{1}{2}\Delta T + T_C\right)}$$

Define the Figure of Merit of thermoelectric as,

$$Z = \frac{S^2}{KR} \qquad\qquad \text{Eq. 11,}$$

then,

$$V_{optimal} = \frac{\dfrac{S\Delta T}{Z} \pm \dfrac{S\Delta T}{Z}\sqrt{1 + \left(\tfrac{1}{2}\Delta T + T_C\right)Z}}{\left(\tfrac{1}{2}\Delta T + T_C\right)} \qquad\qquad \text{Eq. 12.}$$

Since

$$\Delta T = T_H - T_C \qquad\qquad \text{Eq. 13,}$$

and

$$\tfrac{1}{2}\Delta T + T_C = \frac{\left(T_H + T_C\right)}{2} = T_M \qquad\qquad \text{Eq. 14,}$$

which is the average temperature of the hot plate and the cold plate, the optimal voltage may be expressed as,

$$V_{optimal} = S\Delta T\frac{1 \pm \sqrt{1 + T_M Z}}{T_M Z} \qquad\qquad \text{Eq. 15.}$$

The physically sensible optimal voltage is,

$$V_{optimal} = S\Delta T\frac{1 + \sqrt{1 + T_M Z}}{T_M Z} \qquad\qquad \text{Eq. 16.}$$

For a TE module attached to the coolant tube, without consideration of the thermal conductance of the aluminum tube and the boundary layer, the TE cold plate temperature $T_C$ may be approximated by,

$$T_C = T_{clt}$$

Eq. 17.

Similarly, the hot plate temperature may be approximated by,

$$T_H = T_{air}$$

Eq. 18.

Thus, the temperature lift between the cold plate and the hot plate may be estimated as,

$$\Delta T = T_{air} - T_{clt} = T_{air} - f(x)$$

Eq. 19.

Using the $V_{optimal}$ equation obtained above, it can be seen that the optimal TE voltage that allows the maximum COP, or energy efficiency, to be achieved is a function of the position on the coolant tube.

Given a constant power supply voltage of $V_s$, which may be several times higher than $V_{optimal}$, in order to achieve the best energy efficiency under the optimal TE module voltage $V_{optimal}$, and achieve the required air temperature to provide thermal comfort, the number of thermoelectric modules 50 connected in series, $N_{series}$, is given by,

$$N_{series} = \frac{V_s}{V_{optimal}}$$

Eq. 20

In summary, the number of thermoelectric modules 50 electrically interconnected in series to form a group is varied along the length of the tube 26 to compensate for the drop in tubeside fluid temperature from the inlet to the outlet of the tube. This allows the heat exchanger 40 to have a near uniform temperature resulting in a more uniform air temperature exiting the heat exchanger 40 even though the tubeside temperature decreases along the flow direction of the coolant.

By way of example and not limitation, if the coolant temperature near the inlet of the tube is 30 °C, the Delta T of the TE may be set at 40 °C, which might correspond to a voltage across the thermoelectric modules 50 of about 2V, thus six of the thermoelectric modules 50 would be connected in series for a 12 V system. Further in the tube where the coolant might be 20 °C, the Delta T of the TE may be set at 50 °C, which might correspond to a voltage across the thermoelectric modules 50 of 4V, thus three thermoelectric modules 50 would be electrically connected in series for a 12 V system. The number of thermoelectric modules 50 connected in a series group may be adjusted to compensate for the drop in coolant temperature along the tube length while maintaining a constant predetermined fin temperature to heat the air uniformly. The Delta T of the TE may be viewed as the driving potential that transfers heat from the tubeside fluid to the ambient air.

An alternative embodiment of a heat exchanger assembly in which the voltage across the TE can be adjusted to provide the desired heating (or cooling) may include a voltage conversion device in which the voltage may be stepped up from the inherent voltage of the electrical system of the vehicle. For example, for a vehicle with a 12V system, the voltage may be stepped up to 24 volts for use with the thermoelectric modules 50 on the heat exchanger. Each row of tubes having a plurality of thermoelectric modules 50 may include a voltage step down device controlled by a central control module. The voltage for the thermoelectric modules 50 for each row of tubes may be adjusted separately by the central control module to provide the proper voltage to the thermoelectric modules 50 to provide the degree of cooling desire. In this alternative embodiment, the thermoelectric modules 50 in each row of tube may be placed in parallel or series.

Figs. 3A, 3B, and 3C further illustrate details of a non-limiting example of an exploded view of the thermal electric assembly (the assembly 42). The illustration shows the thermoelectric modules 50 attached directly to the tube 26 prior to placing or moving the first dielectric plate 45 in the direction shown by arrows 60. While Figs. 3A, 3B, and 3C only show one group as the group 52 of series connected modules, which could be the first group 54 or second group 56, it should be understood that many groups of series connected modules may be arranged along the tube 26, and that showing a single group is only for the purpose of simplifying the illustrations. Preferably, the first dielectric plate 45 is formed of thermally conductive material, such as ceramic, and is interposed between the thermoelectric modules 50 and the fin 32 (Fig. 2). Alternatively, as shown in Fig. 2, the assembly 42 may include the second dielectric plate 43 formed of thermally conductive material and interposed between the thermoelectric modules 50 and the tube 26.

Each of the thermoelectric modules 50 typically includes at least two electrical contacts so a voltage can be applied to each of the thermoelectric modules 50. As will be explained in more detail, the thermoelectric modules 50 are configured so the electrical contacts can be provided at various locations on the thermoelectric modules 50 so the thermoelectric modules 50 can be readily electrically connected in series to optimize the number of modules series-connected in each group. In the following discussion, the differences between a left module 62, a center module 64, and a right module 66 which form a group of modules that are electrically connected in series, is described. The modifiers left, center, and right only refer to the relative positions of the thermoelectric modules illustrated. It should be understood that a group of series connected modules may include more or less than the three modules illustrated.

The left module 62 includes a bottom contact 70 and a top contact 72 as electrical contacts. The bottom contact 70 is illustrated as a negative voltage only for the purpose of explanation, as it is understood that the polarity of voltage applied to a thermoelectric module can be reversed to provide relative cooling as opposed. By locating the bottom contact 70 adjacent to the tube 26, the tube 26 may be advantageously used as a power rail for several groups of series connected modules. As such, for this example, the tube 26 is configured to be an electrical contact for the assembly 42. If the alternative configuration described above is used, the second dielectric plate 43 (Fig. 2) may be coated with a conductive material such as thick film ink to provide the same power rail function as the tube 26.

The left module 62 in this example includes a top contact 72 on the opposite side of the left module 62 relative to where the bottom contact 70 is located. In contrast, the center module 64 has a top contact 72 for both the negative voltage and positive voltage contacts. In order to electrically connect the left module 62 in series with center module 64, the first dielectric plate 45 may include one or more intermediate contacts 74 formed of a layer of conductive material such as thick film ink applied to the first dielectric plate 45. Accordingly, if more of the thermoelectric modules 50 are to be electrically connected in series, then the first dielectric plate 45 may include a conductive layer configured to define a plurality of intermediate contacts 74 to electrically connect in series the modules in each group 52, e.g. the first group 54 or the second group 56.

The right module 66 has a top contact 72 for a positive voltage in a different location when compared to the positive voltage contacts for the left module 62 and the center module 64. In this configuration, the right module 66 is able to make electrical contact with a power rail that is shared by each group 52, e.g. the first group 54 or the second group 56. Accordingly, the first dielectric plate 45 may include a conductive layer configured to define a power contact 76 to electrically connect each of the plurality of thermoelectric modules 50 to the voltage source 20.

Fig. 3C illustrates an end view of the assembly 42. The thermoelectric module 50 may include a thermoelectric device 80 interposed between a first substrate 82 and a second substrate 84. The substrates may be formed of ceramic material such as alumina. The first substrate 82 and the second substrate 84 may include conductor traces (not shown) formed of thick film ink, and may define vias (not shown) through the respective substrates to electrically interconnect conductor traces on either side of the first substrate 82 and/or the second substrate 84. The materials and methods to provide the conductor traces and the vias are well known.

Fig. 3D illustrates a non-limiting example of a side view of the left module 62 that illustrates the P and N portions of the thermoelectric device 80. The electrical connections to the bottom contact 70 and the top contact 72 are by way of wires 86 passing through vias 88 in the first substrate 82 and the second substrate 84. The wires 86 may be soldered to the aforementioned conductor traces applied to planar portion of the thermoelectric device 80, and solder may be used to form the bottom contact 70 and the top contact 72.

Accordingly, a thermoelectric heat transfer system (the system 10), and a thermoelectric heat exchanger (the heat exchanger 40) for the system 10 is provided. The heat exchanger advantageously varies the number of thermoelectric modules 50 that are electrically connected in series into groups based on the variation of temperature of coolant present in various locations of the heat exchanger to optimize the coefficient of performance for each of the thermoelectric modules 50 in the heat exchanger 40.

While this invention has been described in terms of the preferred embodiments thereof, it is not intended to be so limited, but rather only to the extent set forth in the claims that follow.

**Claims**

1. A heat exchanger (40) comprising:

- a tube (26) arranged between an inlet tank (28) and an outlet tank (30) and configured to contain coolant flowing therethrough and thermally coupling the coolant to a surface of the tube (26),
- a fin (32) configured to transfer heat from the fin (32) to air passing across the fin (32),
- a thermoelectric assembly (42) thermally coupled to the tube (26) and the fin (32), said assembly (42) configured to heat the fin (32) relative to the tube (26) in response to a voltage source (20) applied to the assembly (42),
- wherein said assembly (42) includes a plurality of thermoelectric modules (50),
- wherein each of the thermoelectric modules (50) is electrically interconnected into a group (52) of series connected modules,

- wherein a first group (54) of series connected modules (50) is formed of a first number of modules (50) and a second group (56) of series connected modules (50) is formed of a second number of modules,

- wherein the first group (54) and the second group (56) are arranged along the tube (26) between the inlet tank (28) and the outlet tank (30),

- **characterized in that** the second number is different from the first number.

2. The heat exchanger (40) in accordance with claim 1, wherein the tube (26) is configured to be an electrical contact for the thermoelectric assembly (42).

3. The heat exchanger (40) in accordance with claim 1, wherein the heat exchanger (40) includes a first dielectric plate (45) formed of thermally conductive material and interposed between the plurality of thermoelectric modules (50) and the fin (32).

4. The heat exchanger (40) in accordance with claim 3, wherein the heat exchanger (40) includes a second dielectric plate (43) formed of thermally conductive material and interposed between the plurality of thermoelectric modules (50) and the tube (26).

5. The heat exchanger (40) in accordance with claim 3, wherein the first dielectric plate (45) includes a conductive layer configured to define a power contact (76) to electrically connect each of the plurality of thermoelectric modules (50) to the voltage source (20).

6. The heat exchanger (40) in accordance with claim 3, wherein the first dielectric plate (45) includes a conductive layer configured to define a plurality of intermediate contacts (74) to electrically connect in series the modules in each group (52).

**Patentansprüche**

1. Wärmetauscher (40), umfassend:

- ein Rohr (26), das zwischen einem Einlasstank (28) und einem Auslasstank (30) angeordnet ist und ausgestaltet ist, um durchfließendes Kühlmittel zu enthalten und das Kühlmittel thermisch an eine Oberfläche des Rohrs (26) zu koppeln,

- eine Rippe (32), die zur Wärmeübertragung von der Rippe (32) an die durch die Rippe (32) strömende Luft ausgebildet ist,

- eine thermisch an das Rohr (26) und die Rippe (32) gekoppelte thermoelektrische Baugruppe (42), wobei die Baugruppe (42) ausgebildet ist, um als Reaktion auf eine an die Baugruppe (42) angelegte Spannungsquelle (20) die Rippe (32) relativ zum Rohr (26) zu erwärmen,

- wobei die Baugruppe (42) eine Vielzahl von thermoelektrischen Modulen (50) aufweist,

- wobei jedes der thermoelektrischen Module (50) elektrisch in einer Gruppe (52) von in Reihe geschalteten Modulen angeschlossen ist,

- wobei eine erste Gruppe (54) von in Reihe geschalteten Modulen (50) aus einer ersten Anzahl von Modulen (50) gebildet wird und eine zweite Gruppe (56) von in Reihe geschalteten Modulen (50) aus einer zweiten Anzahl von Modulen gebildet wird,

- wobei die erste Gruppe (54) und die zweite Gruppe (56) entlang des Rohrs (26) zwischen dem Einlasstank (28) und dem Auslasstank (30) angeordnet sind,

**dadurch gekennzeichnet, dass**

die zweite Anzahl verschieden von der ersten Anzahl ist.

2. Wärmetauscher (40) nach Anspruch 1, wobei das Rohr (26) als elektrischer Kontakt für die thermoelektrische Baugruppe (42) ausgebildet ist.

3. Wärmetauscher (40) nach Anspruch 1, wobei der Wärmetauscher (40) eine erste dielektrische Platte (45) aufweist, die aus thermisch leitendem Material besteht und zwischen der Vielzahl von thermoelektrischen Modulen (50) und der Rippe (32) eingefügt ist.

**4.** Wärmetauscher (40) nach Anspruch 3, wobei der Wärmetauscher (40) eine zweite dielektrische Platte (43) aufweist, die aus thermisch leitendem Material besteht und zwischen der Vielzahl von thermoelektrischen Modulen (50) und dem Rohr (26) eingefügt ist.

**5.** Wärmetauscher (40) nach Anspruch 3, wobei die erste dielektrische Platte (45) eine Leitschicht aufweist, die zum Festlegen eines Stromkontakts (76) ausgebildet ist, um jedes der thermoelektrischen Module (50) an die Spannungsquelle (20) anzuschließen.

**6.** Wärmetauscher (40) nach Anspruch 3, wobei die erste dielektrische Platte (45) eine Leitschicht aufweist, die zum Festlegen einer Vielzahl von Zwischenkontakten (74) ausgebildet ist, um die Module in jeder Gruppe (52) elektrisch in Reihe zu schalten.

**Revendications**

**1.** Échangeur de chaleur (40) comprenant :

- un tube (26) agencé entre un réservoir d'entrée (28) et un réservoir de sortie (30) et configuré pour contenir un réfrigérant qui le traverse et couplant thermiquement le réfrigérant à une surface du tube (26),
- une ailette (32) configurée pour transférer de la chaleur de l'ailette (32) à de l'air passant en travers de l'ailette (32),
- un ensemble thermoélectrique (42) thermiquement couplé au tube (26) et à l'ailette (32), ledit ensemble (42) étant configuré pour chauffer l'ailette (32) par rapport au tube (26) en réponse à une source de tension (20) appliquée à l'ensemble (42),
- dans lequel ledit ensemble (42) comprend une pluralité de modules thermoélectriques (50),
- dans lequel chacun des modules thermoélectriques (50) est interconnecté électriquement dans un groupe (52) de modules connectés en série,
- dans lequel un premier groupe (54) de modules connectés en série (50) est formé d'un premier nombre de modules (50) et un second groupe (56) de modules connectés en série (50) est formé d'un second nombre de modules,
- dans lequel le premier groupe (54) et le second groupe (56) sont agencés le long du tube (26) entre le réservoir d'entrée (28) et le réservoir de sortie (30),
- **caractérisé en ce que** le second nombre est différent du premier nombre.

**2.** Échangeur de chaleur (40) selon la revendication 1, dans lequel le tube (26) est configuré pour être un contact électrique pour l'ensemble thermoélectrique (42).

**3.** Échangeur de chaleur (40) selon la revendication 1, dans lequel l'échangeur de chaleur (40) comprend une première plaque diélectrique (45) formée d'un matériau thermoconducteur et intercalée entre la pluralité de modules thermoélectriques (50) et l'ailette (32).

**4.** Échangeur de chaleur (40) selon la revendication 3, dans lequel l'échangeur de chaleur (40) comprend une seconde plaque diélectrique (43) formée d'un matériau thermoconducteur et intercalée entre la pluralité de modules thermoélectriques (50) et le tube (26).

**5.** Échangeur de chaleur (40) selon la revendication 3, dans lequel la première plaque diélectrique (45) comprend une couche conductrice configurée pour définir un contact électrique (76) pour connecter électriquement chacun de la pluralité de modules thermoélectriques (50) à la source de tension (20).

**6.** Échangeur de chaleur (40) selon la revendication 3, dans lequel la première plaque diélectrique (45) comprend une couche conductrice configurée pour définir une pluralité de contacts intermédiaires (74) afin de connecter électriquement en série les modules de chaque groupe (52).

FIG. 1

FIG. 2

FIG. 3A

FIG. 3B

FIG. 3C

## FIG. 3D

TUBE LENGTH, X

## FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009058673 A1